# FASCICULE DE BREVET EUROPEEN

(11) **EP 3 961 835 B1**
(45) Date de publication et mention de la délivrance du brevet: **29.07.2026**
(21) Numéro de dépôt: 21192751.2
(22) Date de dépôt: 24.08.2021
(51) Int. Cl.: H02G 15/184, H01R 13/52, H02G 15/18, H02G 1/14, H01R 4/36, H01R 4/72

(54) **JONCTION DE CÂBLE ÉLECTRIQUE ET PROCÉDÉ D'INSTALLATION ASSOCIÉ**
ELEKTRISCHE KABELVERBINDUNG UND ENTSPRECHENDES INSTALLATIONSVERFAHREN
ELECTRIC CABLE JOINT AND ASSOCIATED INSTALLATION METHOD

(30) Priorité: 26.08.2020 FR 2008717
(43) Date de publication de la demande: 02.03.2022
(73) Titulaire: Nexans, 92400 Courbevoie (FR)
(72) Inventeur: CARPENTIER, Ludovic, 08200 FLOING (FR); QUEIROZ DE CARVALHO, Loïc, 08160 FLIZE (FR); RIVALLAND, Yann, 08090 MONTCY NOTRE DAME (FR); LOUIS, Valentin, 08140 BAZEILLES (FR); VAN GEITE, Evert, 9473 WELLE (BE)
(74) Mandataire: Cabinet Boettcher

(56) Documents cités:
- EP-A1- 2 284 972
- EP-A1- 2 991 179
- US-B2- 9 178 289

## Description

La présente invention se rapporte à une jonction de câble électrique et à un procédé d'installation d'une telle jonction. L'invention se rapporte également à un câble électrique équipé d'une telle jonction.

L'invention appartient au domaine des jonctions de câbles électriques. Elle trouve en particulier à s'appliquer aux jonctions de câbles électriques de puissance, par exemple à moyenne et haute tension (entre environ 1 kV et environ 72 kV), comportant un ou plusieurs types de mastics, de résine ou encore de gel, qui présentent des propriétés électriques et qui sont disposés en une ou plusieurs couches. Ces substances fluides aux propriétés électriques ont par exemple une valeur de rigidité diélectrique (en anglais « dielectric strength ») supérieure à 10 kV/mm.

Les mastics, résine ou gel précités sont des substances susceptibles de s'écouler, notamment sous certaines conditions de température et de pression, ou bien lorsqu'ils sont soumis à des contraintes mécaniques. Or il n'est pas souhaitable qu'un mastic, résine ou gel ayant des propriétés électriques utilisé dans une jonction de câble déborde de la région ou des régions bien définies où il a été disposé. Aussi prévoit-on généralement un élément de retenue du mastic ou résine ou gel.

Ainsi, on connaît par le document EP-A-2 839 543 un ensemble de connexion de câble électrique dans lequel un agent d'étanchéité fluide tel qu'un mastic entoure une partie du corps du connecteur électriquement conducteur connectant les deux câbles. Une paroi de blocage d'écoulement d'agent d'étanchéité en forme d'anneau est prévue sur le corps de connecteur.

Toutefois, un agencement de ce type présente plusieurs inconvénients. En particulier, il ne permet pas de garantir le confinement du mastic, étant donné que ce dernier est disposé sur la surface extérieure du connecteur. Il ne permet pas non plus de garantir que des câbles connectés par un tel ensemble de connexion puissent être stockés à des températures ou à des pressions élevées, également en raison du risque d'écoulement ou de déformation du mastic. En outre, les divers constituants du connecteur sont susceptibles de glisser les uns par rapport aux autres du fait de la fluidité du mastic. Par ailleurs, pour la même raison, l'installation d'un tel connecteur n'est pas aisée.

Le document US 9 178 289 B2 divulgue des corps de joints et des procédés pour recouvrir des connexions et des câbles électriques.

Le document EP 2 284 972 A1 divulgue un ensemble de pose d'un manchon élastique rétractable à froid pour câbles électriques.

La présente invention a pour but de remédier aux inconvénients précités de l'art antérieur.

Dans ce but, la présente invention propose une jonction de câble électrique de puissance conforme à la revendication 1.

Ainsi, une fois la jonction mise en place, après retrait du tube et du film amovibles, la substance fluide reste confinée sous le manchon. Cela permet à la fois d'offrir une isolation électrique garantissant la sécurité des utilisateurs, d'éviter le glissement du manchon, de rendre des câbles équipés d'une telle jonction résistants à un stockage à température ou pression élevée (par exemple, au moins pendant une semaine à 65°C) et de réduire l'effort de frottement lors de l'installation de la jonction.

Par ailleurs, cette jonction de câble présente aussi l'avantage de pouvoir être pré-montée en usine, ce qui facilite encore plus son installation ultérieure sur site et évite d'avoir à manipuler sur le site d'installation une substance avec des propriétés électriques.

Dans un mode particulier de réalisation, le film est en polyester. Cette matière présente l'avantage de pouvoir supporter des efforts de traction sans s'allonger. Cela permet une extraction satisfaisante du film lors de l'installation de la jonction sur des câbles, comme décrit en détail plus loin.

Dans un mode particulier de réalisation, le film est revêtu de silicone sur ses deux faces. La couche de silicone en contact avec le tube amovible est avantageuse du fait de ses propriétés de glissement, car celles-ci facilitent l'extraction du film lors de l'installation de la jonction sur des câbles. La couche de silicone du côté de la substance fluide est avantageuse du fait de ses propriétés anti-adhérence, car ainsi, la substance fluide n'adhère pas au film amovible.

Dans un mode particulier de réalisation, la surface du tube présente une granulométrie prédéterminée permettant à tout élément disposé sur le tube d'être mis en mouvement même si cet élément exerce une charge significative, pouvant aller jusqu'à 5 daN/cm².

Dans un mode particulier de réalisation, le tube est en polycarbonate. Cela permet d'augmenter encore la résistance de la jonction à un stockage à température ou pression élevée. Par exemple, le tube peut ainsi supporter des efforts de pression de plus de 1 daN/cm² exercés par le manchon rétractable et ce, dans des conditions de stockage comprises entre -20°C et +80°C.

Dans un mode particulier de réalisation, le tube est cylindrique. Cette forme est avantageuse pour obtenir une bonne stabilité mécanique de la jonction.

Dans un mode particulier de réalisation, le manchon rétractable est en EPDM (Ethylène-Propylène-Diène Monomère). Cette matière est avantageuse car elle offre au manchon rétractable des propriétés d'allongement ainsi que la faculté de reprendre sa forme initiale après retrait du film et du tube, lors de l'installation de la jonction sur des câbles. Cette matière présente en outre des caractéristiques électriques avantageuses, telles qu'un fort pouvoir d'isolation électrique et de maitrise des champs électriques.

Dans un mode particulier de réalisation, le manchon rétractable est en silicone. Cette matière est avantageuse en ce qu'elle présente une excellente tenue à haute température.

Dans le même but que celui indiqué plus haut, la présente invention propose également un câble électrique de puissance comportant au moins deux segments de câble, remarquable en ce qu'au moins deux des au moins deux segments de câble sont reliés entre eux par une jonction de câble de puissance telle que succinctement décrite ci-dessus.

Il peut par exemple, mais non nécessairement, s'agir d'un câble à moyenne tension ou à haute tension.

Dans le même but que celui indiqué plus haut, la présente invention propose également un ensemble de connexion de câble électrique de puissance comportant deux segments de câble électrique de puissance et un connecteur mécanique assemblant les deux segments de câble, ledit ensemble étant remarquable en ce qu'il comporte en outre une jonction de câble électrique de puissance telle que décrite succinctement ci-dessus disposée autour du connecteur mécanique et d'au moins une partie des deux segments de câble.

Les caractéristiques particulières et les avantages du câble et de l'ensemble de connexion étant similaires à ceux de la jonction, ils ne sont pas répétés ici.

Toujours dans le même but que celui indiqué plus haut, la présente invention propose en outre un procédé d'installation d'une jonction de câble électrique de puissance telle que décrite succinctement ci-dessus, entre deux segments de câble électrique de puissance assemblés mécaniquement par un connecteur mécanique, le procédé étant remarquable en ce qu'il comporte une étape consistant à ôter, en tirant à l'aide d'un crochet, le tube et le film amovibles précités.

L'installation de la jonction est ainsi grandement facilitée : elle peut être réalisée en une manœuvre unique, en raison du fait que les divers éléments électriques sont réunis en une seule partie électrique globale sur le tube amovible, grâce à la structure de la jonction succinctement décrite ci-dessus.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig. 1] est une vue schématique d'une jonction de câble électrique de puissance conforme à la présente invention, dans un mode particulier de réalisation et dans un état avant installation.
[Fig. 2] est une vue schématique d'un connecteur mécanique assemblant deux segments de câble d'un câble électrique de puissance conforme à la présente invention, dans un mode particulier de réalisation.
[Fig. 3] est une vue schématique illustrant le procédé d'installation de la jonction conforme à la présente invention, dans un mode particulier de réalisation.
[Fig. 4] est une vue schématique montrant partiellement l'intérieur de la jonction une fois l'installation terminée, dans un mode particulier de réalisation.

### Description de mode(s) de réalisation

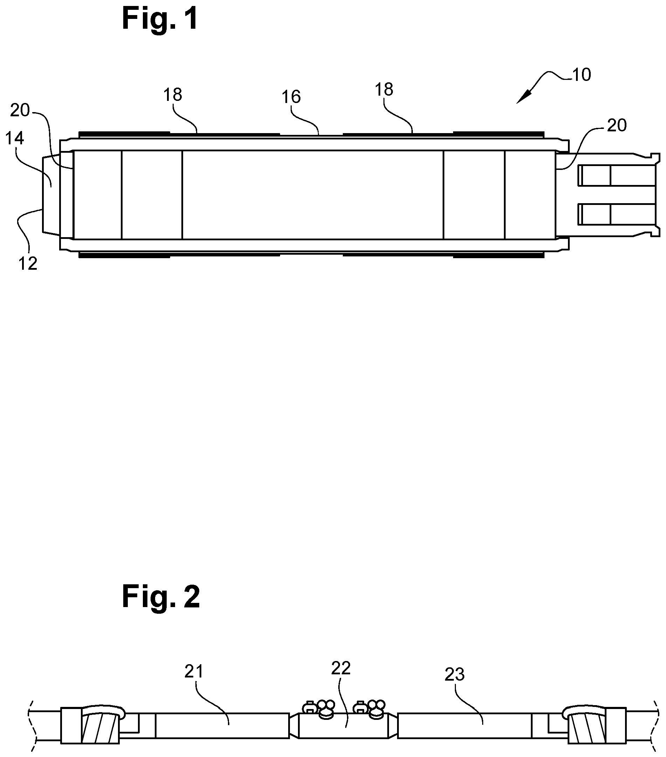

Comme le montre la figure 1, avant installation sur des câbles ou sur des segments de câble, une jonction 10 de câble électrique de puissance conforme à la présente invention comporte un tube support 12. Le tube support 12 est amovible, comme décrit plus en détail ci-après, car il sert uniquement de support pour la réalisation de la jonction 10. Après installation sur des câbles ou segments de câble, la jonction 10 ne comporte plus le tube support 12.

Dans le mode particulier de réalisation illustré, le tube 12 est de forme cylindrique. Néanmoins, il pourrait avoir toute autre forme jugée appropriée, comme par exemple une forme aplatie ou une section rectangulaire ou carrée, ces exemples étant donnés à titre non limitatif.

Avantageusement mais non nécessairement, le tube 12 peut être réalisé à partir de polycarbonate. Il peut comporter du polycarbonate et d'autres constituants, ou bien être entièrement constitué de polycarbonate.

Avant installation, la jonction 10 comporte en outre un film 14 disposé sur le tube 12. Le film 14 est également amovible, comme décrit plus en détail ci-après. Après installation, la jonction 10 ne comporte plus le film 14.

Avant installation, le film 14 est disposé sur tout ou partie de la surface extérieure du tube 12.

Avantageusement mais non nécessairement, le film 14 peut être réalisé à partir de polyester. Il peut comporter du polyester et d'autres constituants, ou bien être entièrement constitué de polyester.

Selon l'invention, le film 14 est revêtu, sur une de ses faces ou, de préférence, sur ses deux faces, d'une couche d'épaisseur prédéterminée, par exemple quelques microns, d'une matière comportant du silicone et d'autres constituants, ou bien comportant uniquement du silicone.

Avantageusement mais non nécessairement, la surface du tube 12, soit sur une face, soit sur ses deux faces, présente une granulométrie spécifique. La rugosité du tube 12 est en effet telle que le film 14, bien que subissant une charge importante, peut être retiré aisément lors de l'installation de la jonction 10 sur des câbles. A titre d'exemple non limitatif, la rugosité de la surface extérieure du tube peut être comprise entre des valeurs minimales de Ra = 3,2 µm et Rz = 12,5 µm et des valeurs maximales de Ra = 6,3 µm et Rz = 25 µm.

Ainsi, grâce à l'invention, tout élément présent sur le tube 12 peut être mis en mouvement même si cet élément exerce une charge pouvant aller jusqu'à 5 daN/cm².

La jonction 10 comporte en outre un manchon 16 qui, avant installation de la jonction sur câble, est disposé autour du tube 12 amovible et du film 14 amovible. Le manchon 16 est rétractable, par exemple thermorétractable ou rétractable par pression et est initialement dans un état dilaté. Il sera dans un état rétracté une fois l'installation achevée.

Avantageusement mais non nécessairement, le manchon 16 peut être réalisé à partir d'EPDM (Ethylène-Propylène-Diène Monomère). Il peut comporter de l'EPDM et d'autres constituants, ou bien être entièrement constitué d'EPDM.

En variante, le manchon 16 peut être réalisé à partir de silicone. Il peut comporter du silicone et d'autres constituants, ou bien être entièrement constitué de silicone.

Conformément à la présente invention, la jonction 10 comporte en outre une substance fluide 18 présentant des propriétés électriques et au moins deux anneaux 20 de retenue de la substance fluide 18, coaxiaux au manchon 16 et disposés sous le manchon 16. La substance fluide 18 est également disposée sous le manchon 16, entre les deux anneaux 20, ou entre deux anneaux 20 successifs si la jonction 10 comporte plus de deux anneaux 20.

A titre d'exemple non limitatif, la substance fluide 18 peut comporter un ou plusieurs types de mastic, résine ou gel ou toute autre matière fluide ayant des propriétés électriques adaptées.

Quel que soit le nombre total d'anneaux, deux anneaux 20 successifs sont agencés à une distance non nulle prédéterminée l'un de l'autre, cette distance étant fonction de la quantité de substance fluide 18 prévue entre les deux anneaux considérés et de l'épaisseur souhaitée pour la couche de substance fluide 18. De façon plus générale, les anneaux 20 sont dimensionnés de façon à confiner la substance fluide 18.

De même que le manchon 16, les anneaux 20 peuvent être réalisés à partir d'EPDM ou de silicone. La matière pourra être modifiée suivant l'application concernée et selon les efforts à supporter.

La jonction 10 peut être installée entre deux câbles électriques de puissance pour les connecter électriquement entre eux. De même, elle peut être installée entre deux segments de câble d'un même câble électrique de puissance.

Avantageusement, ce ou ces câbles sont à moyenne tension ou à haute tension. Ces exemples de câbles ne sont pas limitatifs. L'invention peut s'appliquer à d'autres types de câbles.

L'invention permet à la jonction 10 d'épouser la forme du raccordement entre les câbles ou segments de câbles considérés. Grâce aux propriétés élastiques de la jonction 10, des câbles de différentes sections peuvent être connectés.

Ainsi, comme le montre la figure 2 dans un mode particulier de réalisation, un câble électrique de puissance conforme à la présente invention comporte au moins deux segments 21 et 23 de câble. Ces deux segments 21, 23 (ou deux segments successifs de câble si le câble comporte plus de deux segments) sont assemblés mécaniquement par un connecteur mécanique 22.

On pourrait tout aussi bien considérer que le connecteur mécanique 22 relie mécaniquement entre eux, non pas deux segments d'un même câble, mais deux câbles électriques.

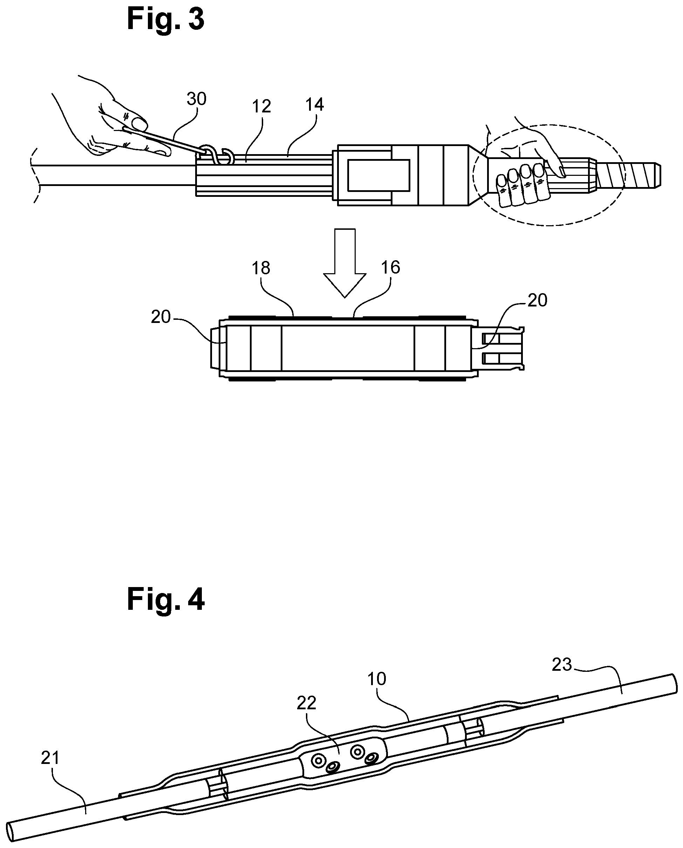

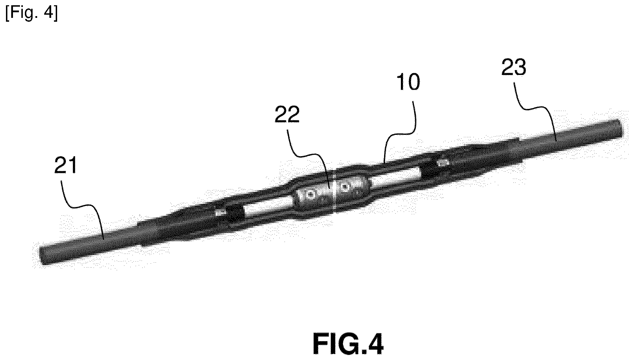

Comme le montre le mode particulier de réalisation de la figure 4, une fois la jonction 10 installée et connectant donc électriquement les segments 21 et 23 de câble, un ensemble 40 de connexion de câble électrique de puissance est formé, qui comporte les deux segments 21, 23, le connecteur mécanique 22 et la jonction 10.

La jonction 10 est disposée autour du connecteur mécanique 22 et d'au moins une partie des deux segments 21, 23, cette partie contenant au moins les extrémités des segments assemblées par le connecteur mécanique 22.

La manœuvre d'installation de la jonction 10 est illustrée par la figure 3 dans un mode particulier de réalisation.

Cette manœuvre consiste, pour un opérateur, à ôter d'une main, en tirant vers lui à l'aide d'un crochet 30, par un côté de la jonction 10, le tube 12 et le film 14 qui, comme décrit plus haut, sont amovibles à cet effet.

Pendant cette manœuvre, l'opérateur peut tenir de l'autre main une partie du câble, ou du segment de câble, située de l'autre côté de la jonction 10, comme illustré dans la région de la figure 3 entourée en tirets.

Le résultat de cette manœuvre est illustré sur la figure 3 sous la flèche verticale : la connexion électrique via la jonction 10 est alors réalisée.

## Revendications

1. Jonction (10) de câble électrique de puissance comportant :
un tube (12) amovible ;
un film (14) amovible disposé sur ledit tube (12) amovible ;
un manchon rétractable (16) disposé autour dudit tube (12) et dudit film (14) amovibles ;
ladite jonction (10) comportant en outre une substance fluide (18) présentant des propriétés électriques disposée sous ledit manchon rétractable (16) et au moins deux anneaux (20) coaxiaux audit manchon rétractable (16) agencés à une distance non nulle prédéterminée l'un de l'autre sous ledit manchon rétractable (16), ladite substance fluide (18) étant disposée entre lesdits au moins deux anneaux (20), lesdits au moins deux anneaux (20) étant disposés sous ledit manchon rétractable (16) et étant dimensionnés de façon à confiner ladite substance fluide (18) et dans laquelle ledit film (14) est revêtu d'une matière contenant du silicone au moins du côté de ladite substance fluide (18).

2. Jonction (10) selon la revendication 1, **caractérisée en ce que** ledit film (14) est en polyester.

3. Jonction (10) selon la revendication 1 ou 2, **caractérisée en ce que** ledit film (14) est revêtu de silicone sur ses deux faces.

4. Jonction (10) selon la revendication 1, 2 ou 3, **caractérisée en ce que** la surface dudit tube (12) présente une granulométrie prédéterminée.

5. Jonction (10) selon l'une quelconque des revendications précédentes, **caractérisée en ce que** ledit tube (12) est en polycarbonate.

6. Jonction (10) selon l'une quelconque des revendications précédentes, **caractérisée en ce que** ledit tube (12) est cylindrique.

7. Jonction (10) selon l'une quelconque des revendications précédentes, **caractérisée en ce que** ledit manchon rétractable (16) est en EPDM.

8. Jonction (10) selon l'une quelconque des revendications 1 à 6, **caractérisée en ce que** ledit manchon rétractable (16) est en silicone.

9. Câble électrique de puissance comportant au moins deux segments (21, 23) de câble, **caractérisé en ce qu'**au moins deux desdits au moins deux segments (21, 23) de câble sont reliés entre eux par une jonction (10) de câble de puissance selon l'une quelconque des revendications précédentes.

10. Câble selon la revendication précédente, **caractérisé en ce que** c'est un câble à moyenne tension ou à haute tension.

11. Ensemble (40) de connexion de câble électrique de puissance comportant deux segments (21, 23) de câble électrique de puissance et un connecteur mécanique (22) assemblant lesdits deux segments (21, 23) de câble, ledit ensemble étant **caractérisé en ce qu'**il comporte en outre une jonction (10) de câble électrique de puissance selon l'une quelconque des revendications 1 à 8 disposée autour dudit connecteur mécanique (22) et d'au moins une partie desdits deux segments (21, 23) de câble.

12. Procédé d'installation d'une jonction (10) de câble électrique de puissance selon l'une quelconque des revendications 1 à 8, entre deux segments (21, 23) de câble électrique de puissance assemblés mécaniquement par un connecteur mécanique (22), ledit procédé étant **caractérisé en ce qu'**il comporte une étape consistant à ôter, en tirant à l'aide d'un crochet (30), ledit tube (12) et ledit film (14) amovibles.

## Patentansprüche

1. Leistungskabelverbindung (10), enthaltend:
ein entfernbares Rohr (12);
eine entfernbare Folie (14), die auf dem entfernbaren Rohr (12) angeordnet ist;
eine Schrumpfmuffe (16), die um das entfernbare Rohr (12) und um die entfernbare Folie (14) herum angeordnet ist; wobei die Kabelverbindung (10) ferner enthält: eine fließfähige Substanz (18) mit elektrischen Eigenschaften, die unter der Schrumpfmuffe (16) angeordnet ist, sowie zumindest zwei zur Schrumpfmuffe (16) koaxiale Ringe (20), die unter der Schrumpfmuffe (16) in einem vorbestimmten Abstand ungleich Null voneinander beabstandet angeordnet sind, wobei die fließfähige Substanz (18) zwischen den zumindest zwei Ringen (20) angeordnet sind, wobei die zumindest zwei Ringe (20) unter der Schrumpfmuffe (16) angeordnet sind und derart bemessen sind, dass sie die fließfähige Substanz (18) einschließen, und wobei die Folie (14) auf der Seite der fließfähigen Substanz (18) mit einem silikonhaltigen Material beschichtet ist.

2. Kabelverbindung (10) nach Anspruch 1, **dadurch gekennzeichnet, dass** die Folie (14) aus Polyester gefertigt ist.

3. Kabelverbindung (10) nach Anspruch 1 oder 2, **dadurch gekennzeichnet, dass** die Folie (14) auf beiden Seiten mit Silikon beschichtet ist.

4. Kabelverbindung (10) nach Anspruch 1, 2 oder 3, **dadurch gekennzeichnet, dass** die Oberfläche des Rohrs (12) eine vorbestimmte Körnung aufweist.

5. Kabelverbindung (10) nach einem der vorhergehenden Ansprüche, **dadurch gekennzeichnet, dass** das Rohr (12) aus Polycarbonat gefertigt ist.

6. Kabelverbindung (10) nach einem der vorhergehenden Ansprüche, **dadurch gekennzeichnet, dass** das Rohr (12) zylinderförmig ausgebildet ist.

7. Kabelverbindung (10) nach einem der vorhergehenden Ansprüche, **dadurch gekennzeichnet, dass** die Schrumpfmuffe (16) aus EPDM gefertigt ist.

8. Kabelverbindung (10) nach einem der Ansprüche 1 bis 6, **dadurch gekennzeichnet, dass** die Schrumpfmuffe (16) aus Silikon gefertigt ist.

9. Elektrisches Leistungskabel, enthaltend zumindest zwei Kabelsegmente (21, 23), **dadurch gekennzeichnet, dass** zumindest zwei der zumindest zwei Kabelsegmente (21, 23) durch eine Leistungskabelverbindung (10) nach einem der vorhergehenden Ansprüche miteinander verbunden sind.

10. Kabel nach dem vorhergehenden Anspruch, **dadurch gekennzeichnet, dass** es sich bei dem Kabel um ein Mittelspannungskabel oder um ein Hochspannungskabel handelt.

11. Verbindungsanordnung (40) zur Verbindung eines elektrischen Leistungskabels, enthaltend zwei Leistungskabelsegmente (21, 23) und einen mechanischen Verbinder (22), welcher die beiden Kabelsegmente (21, 23) miteinander verbindet, wobei die Anordnung **dadurch gekennzeichnet ist, dass** sie ferner eine Leistungskabelverbindung (10) nach einem der Ansprüche 1 bis 8 enthält, die um den mechanischen Verbinder (22) sowie um zumindest einen Teil der beiden Kabelsegmente (21, 23) herum angeordnet ist.

12. Verfahren zur Installation einer Leistungskabelverbindung (10) nach einem der Ansprüche 1 bis 8 zwischen zwei Leistungskabelsegmenten (21, 23), die durch einen mechanischen Verbinder (22) mechanisch miteinander verbunden sind, wobei das Verfahren **dadurch gekennzeichnet ist, dass** es einen Schritt enthält, in welchem das entfernbare Rohr (12) und die entfernbare Folie (14) mithilfe eines Hakens (30) herausgezogen werden.

## Claims

1. An electrical power cable joint (10), comprising:
a removable tube (12);
a removable film (14) provided on said removable tube (12);
a retractable sleeve (16) provided around said removable tube (12) and said removable film (14);
said joint (10) further comprising a fluid substance (18) having electrical properties provided beneath said retractable sleeve (16), and at least two rings (20) that are coaxial with said retractable sleeve (16) and arranged at a predetermined non-zero distance from one another beneath said retractable sleeve (16), said fluid substance (18) being provided between said at least two rings (20), said at least two rings (20) being provided beneath said retractable sleeve (16) and being sized so as to contain said fluid substance (18) and in which said film (14) is coated with a silicone-containing material at least on the side of said fluid substance (18).

2. The joint (10) according to claim 1, **characterized in that** said film (14) is made of polyester.

3. The joint (10) according to claim 1 or 2, **characterized in that** said film (14) is coated with silicone on the two faces thereof.

4. The joint (10) according to claim 1, 2, or 3, **characterized in that** the surface of said tube (12) has a predetermined grain size.

5. The joint (10) according to any one of the preceding claims, **characterized in that** said tube (12) is made of polycarbonate.

6. The joint (10) according to any one of the preceding claims, **characterized in that** said tube (12) is cylindrical.

7. The joint (10) according to any one of the preceding claims, **characterized in that** said retractable sleeve (16) is made of EPDM.

8. The joint (10) according to any one of claims 1 to 6, **characterized in that** said retractable sleeve (16) is made of silicone.

9. An electrical power cable comprising at least two cable segments (21, 23), **characterized in that** at least two of said at least two cable segments (21, 23) are interconnected by a power cable joint (10) according to any one of the preceding claims.

10. The cable according to the preceding claim, **characterized in that** it is a medium-voltage or high-voltage cable.

11. An electrical power cable connection assembly (40) comprising two electrical power cable segments (21, 23) and a mechanical connector (22) that joins said two cable segments (21, 23), said assembly being **characterized in that** it further comprises an electrical power cable joint (10) according to any one of claims 1 to 8, provided around said mechanical connector (22) and at least a portion of said two cable segments (21, 23).

12. A method for installing an electrical power cable joint (10) according to any one of claims 1 to 8, between two electrical power cable segments (21, 23) that are mechanically joined by a mechanical connector (22), said method being **characterized in that** it comprises a step of removing, by pulling with a hook (30), said removable tube (12) and said removable film (14).
